# EUROPÄISCHE PATENTSCHRIFT

(11) **EP 2 845 636 B1**
(45) Veröffentlichungstag und Bekanntmachung des Hinweises auf die Patenterteilung: **06.12.2017**
(21) Anmeldenummer: 14169582.5
(22) Anmeldetag: 23.05.2014
(51) Int. Cl.: B01D 46/24, B01D 29/11

(54) **Filterelement und Verfahren zur Herstellung eines Filterelements**
Filter element and method for producing the same
Élément de filtre et procédé de fabrication d'un élément de filtre

(30) Priorität: 03.07.2013 DE 102013011086
(43) Veröffentlichungstag der Anmeldung: 11.03.2015
(73) Patentinhaber: MANN + HUMMEL GMBH, 71636 Ludwigsburg (DE)
(72) Erfinder: Hasenfratz, Robert, 74523 Schwäbisch-Hall (DE); Pflüger, Frank, 74343 Sachsenheim (DE); Rösgen, André, 73630 Remshalden (DE); Thalmann, Christian, 67346 Speyer (DE); Wagner, Fabian, 71696 Möglingen (DE)

(56) Entgegenhaltungen:
- EP-A1- 1 388 360
- DE-A1- 19 718 603
- DE-A1- 19 935 297
- DE-U1-202005 013 478

## Beschreibung

### Technisches Gebiet

Die Erfindung betrifft ein Filterelement eines Filters für Fluid, insbesondere Kraftstoff, Öl, Wasser, Harnstofflösung oder Luft, insbesondere einer Brennkraftmaschine, insbesondere eines Kraftfahrzeugs, mit einem als Filtermediumhohlkörper gestalteten, wenigstens bezüglich einer gedachten Achse umfangsmäßig geschlossenen Filtermedium, welches an wenigstens einer Stirnseite einen Endkörper aufweist, der einen Abschlussabschnitt umfasst, der dicht wenigstens mit dem Filtermedium verbunden ist und der eine zentrale Fluidöffnung aufweist, in die ein rohrartiges Anschlusselement des Filters eingesteckt werden kann, und mit wenigstens einem Dichtabschnitt an dem Endkörper zum umfangsmäßigen Abdichten der Fluidöffnung gegen das rohrartige Anschlusselement.

Ferner betrifft die Erfindung ein Verfahren zur Herstellung eines Filterelements, insbesondere eines erfindungsgemäßen Filterelements, für Fluid, insbesondere Kraftstoff, Öl, Wasser, Harnstofflösung oder Luft, insbesondere einer Brennkraftmaschine, insbesondere eines Kraftfahrzeugs, bei dem ein Filtermedium bezüglich einer gedachten Achse zu einem umfangsmäßig geschlossenen Filtermediumhohlkörper gestaltet wird; bei dem an wenigstens einer Stirnseite des Filtermediumhohlkörpers ein Endkörper mit einem Abschlussabschnitt dicht wenigstens mit dem Filtermedium verbunden wird, der eine zentrale Fluidöffnung aufweist, in die ein rohrartiges Anschlusselement des Filters eingesteckt werden kann; bei dem wenigstens ein Dichtabschnitt zum umfangsmäßigen Abdichten der Fluidöffnung gegen das rohrartige Anschlusselement an dem Endkörper angeordnet wird.

### Stand der Technik

Ein Filterelement und ein Verfahren zur Herstellung eines Filterelements der eingangs genannten Art sind z.B. aus der DE 44 193 61 A1 bekannt. Des Weiteren weist ein vom Markt bekanntes Rundfilterelement eines Luftfilters für Verbrennungsluft einer Brennkraftmaschine einen Filterbalg aus einem umfangsmäßig geschlossenen Filtermedium auf. An den Stirnseiten des Filterbalgs ist jeweils eine Endscheibe angeordnet und dicht mit dem Filtermedium verbunden. Eine der Endscheiben weist eine zentrale Luftöffnung auf, in die ein gehäusefester Anschlussstutzen des Luftfilters eingesteckt wird. Eine O-Ring-Dichtung dichtet die Luftöffnung gegen den Anschlussstutzen ab. Die O-RingDichtung ist in einer entsprechenden Aufnahme an der Endscheibe angeordnet.

Darüber hinaus sind aus DE 197 18 603 A1und DE 199 35 297 A1 Filterelemente mit jeweils einem hülsenförmigen, axial abstehenden Endkörper an der offenen Endscheibe bekannt, die eine Dichtungsfunktion ausüben und zur Übertragung der Dichtungskräfte sehr steif ausgebildet sind, d. h. nicht mit üblichen Montagekräften verformbar sind.

Weitere Beispiele für Filterelemente mit hülsenförmigen axial abstehenden Dichtabschnitten sind aus DE 20 2005 013478 U1 und EP 1 388 360 A1 bekannt, wobei dort die Längsschnittformen der Begrenzungswände der jeweiligen Dichtabschnitte einen Winkel gegenüber der Filterelementlängsachse aufweisen bzw. einen oder mehrfache Richtungswechsel zeigen, was als Anpassung an eine korrespondierend geformte Dichtungsgegenkontur dient. Die dort offenbarten Dichtabschnitte sind nicht flexibel, sondern starr. Der Erfindung liegt die Aufgabe zugrunde, ein Filterelement und ein Verfahren zur Herstellung eines Filterelements der eingangs genannten Art zu gestalten, bei dem der wenigstens eine Dichtabschnitt einfacher realisiert werden kann.

### Offenbarung der Erfindung

Diese Aufgabe wird erfindungsgemäß dadurch gelöst, dass der wenigstens eine Dichtabschnitt mittels wenigstens eines flexiblen Verbindungsabschnitts einstückig mit dem Abschlussabschnitt verbunden ist.

Erfindungsgemäß ist also der Endkörper als einstückiges Bauteil realisiert und umfasst den Abschlussabschnitt, den wenigstens einen Verbindungsabschnitt und den wenigstens einen Dichtabschnitt. Der Abschlussabschnitt, der wenigstens eine Verbindungsabschnitt und der wenigstens eine Dichtabschnitt können jeweils bezüglich ihrer Funktion optimiert sein. Die unterschiedlichen Abschnitte können vorteilhafterweise jeweils eine unterschiedliche mechanische Flexibilität aufweisen.

Vorteilhafterweise kann der Abschlussabschnitt mechanisch stabil und im Vergleich zu den anderen Abschnitten unflexibel sein. Auf diese Weise kann die mechanische Stabilität des Endkörpers und damit des gesamten Filterelements verbessert werden. Vorteilhafterweise kann der Anschlussabschnitt eine Scheibenform haben. Scheiben sind flach und können platzsparend die entsprechende Stirnseite des Filtermediums abdecken.

Der wenigstens eine Dichtabschnitt kann vorteilhafterweise zumindest in einem im Einbauzustand an dem rohrartigen Anschlusselement anliegenden Bereich eine für die Dichtfunktion optimale Flexibilität aufweisen. Auf diese Weise kann die Dichtfunktion verbessert werden. Erfindungsgemäß ist der wenigstens eine Dichtabschnitt ringartig oder hülsenartig, insbesondere in der Form eines Zylindermantels oder Kegelmantels. Der wenigstens eine Dichtabschnitt umgibt die gedachte Achse umfangsmäßig geschlossen.

Der wenigstens eine Verbindungsabschnitt kann vorteilhafterweise eine Flexibilität aufweisen, die eine Bewegung des wenigstens einen Dichtabschnitt relativ zum Abschlussabschnitt zulässt. Auf diese Weise kann ein Toleranzausgleich erfolgen. Ferner kann eine Position und/oder Orientierung des wenigstens einen Dichtabschnitt relativ zum Abschlussabschnitt einfach verändert werden. Vorteilhafterweise kann der wenigstens eine Verbindungsabschnitt ringartig oder hülsenartig, insbesondere in der Form eines Zylindermantels oder Kegelmantels, sein. Der wenigstens eine Verbindungsabschnitt kann vorteilhafterweise die gedachte Achse umfangsmäßig geschlossen umgeben.

Außerdem kann der einstückige Endkörper mit dem Abschlussabschnitt, dem wenigstens einen Verbindungsabschnitt und dem wenigstens einen Dichtabschnitt gemeinsam vorgefertigt werden. Der wenigstens eine Dichtabschnitt kann mit dem wenigstens einen Verbindungsabschnitt verliersicher mit dem Abschlussabschnitt verbunden sein. Der Endkörper kann so einfach gelagert und transportiert werden. Der wenigstens eine Dichtabschnitt kann vorteilhafterweise so an dem Abschlussabschnitt angeordnet sein, dass der wenigstens eine Dichtabschnitt einfach in der korrekten Einbauposition am Filterelement platziert ist. Auf diese Weise kann ein Montageaufwand reduziert werden. Ferner sind keine separaten Bauteile, insbesondere separate Dichtungen, erforderlich. So kann der Materialaufwand insgesamt verringert werden.

Vorteilhafterweise können der wenigstens eine Dichtabschnitt, der wenigstens eine Verbindungsabschnitt und/oder der Abschlussabschnitt aus dem gleichen Material sein. So kann der Endkörper einfacher gefertigt werden als dies insbesondere bei Zweikomponentenbauteilen der Fall ist. Die Flexibilität des wenigstens einen Verbindungsabschnitts kann vorteilhafterweise durch eine entsprechende Formgebung des Materials realisiert werden. Vorteilhafterweise können Materialdicken im Verbindungsabschnitt entsprechend geringer sein als im Abschlussabschnitt und/oder im wenigstens einen Dichtabschnitt.

Vorteilhafterweise kann der Endkörper mit dem wenigstens einen Dichtabschnitt, dem Abschlussabschnitt und dem Verbindungsabschnitt aus Kunststoff sein. Kunststoff kann einfach geformt werden. Aus Kunststoff können auch flexible Abschnitte einfach realisiert werden. Mit Kunststoff kann außerdem eine gute Dichtwirkung erzeugt werden. Kunststoff kann sich flexibel an entsprechenden Dichtflächen des rohrartigen Anschlusselements anpassen und gegen dieses abdichten.

Das Filterelement kann vorteilhafterweise ein Rundfilterelement sein. Das Filtermedium kann vorteilhafterweise umfangsmäßig geschlossen sein. Es kann vorteilhafterweise zickzackförmig oder sternförmig gefaltet sein. Das Rundfilterelement kann einen runden, ovalen oder andersartig gebogenen Querschnitt haben. Anstelle des Rundfilterelements kann auch ein Filterelement mit einem Filtermediumhohlkörper mit einem eckigen, insbesondere quadratischen, rechteckigen oder dreieckigen, Querschnitt vorgesehen sein.

Die zentrale Fluidöffnung in dem Endkörper kann vorteilhafterweise mit einem von dem Filtermedium umgebenen Innenraum des Filtermediumhohlkörpers verbunden sein. Bei eingebautem Filterelement kann so das rohrartige Anschlusselement des Filters durch die Fluidöffnung in den Innenraum des Filtermediumhohlkörpers ragen. Das Anschlusselement kann vorteilhafterweise wenigstens einen Fluidkanal aufweisen und so den Innenraum mit einem Einlass oder einem Auslass des Filtergehäuses für das Fluid verbinden.

Bei dem rohrartigen Anschlusselement des Filters kann es sich vorteilhafterweise um einen Anschlussstutzen oder ein Mittelrohr handeln. Das rohrartige Anschlusselement kann vorteilhafterweise fest mit dem Filtergehäuse verbunden sein.

Bei einer vorteilhaften Ausführungsform kann der Endkörper mit dem Abschlussabschnitt, dem wenigstens einen Verbindungsabschnitt und dem wenigstens einen Dichtabschnitt als Blasformteil realisiert sein. Mittels Blasformverfahren können einfach komplexe Formen für den Endkörper realisiert werden. Der Endkörper kann vorteilhafterweise nach einem Blasformverfahren einfach aus Kunststoff hergestellt werden.

Erfindungsgemäß ist der wenigstens eine Dichtabschnitt um den wenigstens einen Verbindungsabschnitt axial zu einer Achse des Dichtabschnitts umgestülpt. Im Einbauzustand des Filterelements kann die Achse des Dichtabschnitts vorteilhafterweise koaxial zu einer Achse der zentralen Fluidöffnung im Endkörper sein. Die Achsen können vorteilhafterweise koaxial zu der gedachten Achse des Filterelements sein.

Der wenigstens eine Verbindungsabschnitt ist in einem Maße flexibel, das ein Umstülpen des wenigstens einen Dichtabschnitts ermöglicht. Eine Dichtungsfläche des Dichtabschnitts ist bei der Herstellung des Endkörpers zunächst radial außen und einfach zugänglich realisiert und nach der Montage des Endkörpers einem Filtermediumhohlkörper nach innen umgestülpt. Auf diese Weise kann die Dichtungsfläche des Dichtabschnitts einfacher und besser realisiert werden. Der Endkörper kann einfach auf die Stirnseite des Filtermediums aufgesetzt und anschließend der Dichtabschnitt umgestülpt werden. So kann die Montage des Endkörpers an dem Filtermedium weiter vereinfacht werden.

Bei einer weiteren vorteilhaften Ausführungsform kann der wenigstens eine Dichtabschnitt wenigstens an seiner im Einbauzustand des Filterelements im Filter dem rohrartigen Anschlusselement zugewandten Umfangsseite wenigstens eine Dichtkontur aufweisen. Die Dichtkontur kann vorteilhafterweise ein wellenförmiges Profil aufweisen, dessen Wellen umfangsmäßig bezüglich des wenigstens einen Dichtabschnitts verlaufen. Dabei wechseln sich jeweils umfangsmäßig verlaufende Wellenberge mit entsprechend umfangsmäßig verlaufenden Wellentälern ab. Die Dichtkontur ermöglicht eine verbesserte Flexibilität des wenigstens einen Dichtabschnitts. Auf diese Weise kann sich die Form des wenigstens einen Dichtabschnitts besser an die Form der radial äußeren Umfangsseite des rohrartigen Anschlusselements anpassen. So kann die Dichtwirkung weiter verbessert werden. Dadurch, dass die Umfangsseite des Dichtabschnitts bei der Herstellung vor dem Umstülpen zunächst radial außen angeordnet sein kann, kann die Dichtkontur einfacher realisiert werden. Nach dem Umstülpen des Dichtabschnitts kann die Dichtkontur an der radial inneren Umfangsseite angeordnet sein, welche einer entsprechenden Dichtfläche des rohrartigen Anschlusselements zugewandt ist.

Bei einer weiteren vorteilhaften Ausführungsform kann der wenigstens eine Dichtabschnitt an wenigstens einem bezüglich der Fluidöffnung wenigstens teilumfänglich verlaufenden Stützabschnitt des Filterelements, insbesondere eines Stützrohrs und/oder des Endkörpers anliegen, welcher sich im Einbauzustand des Filterelements auf der dem rohrartigen Anschlusselement radial gegenüberliegenden Seite des wenigstens einen Dichtabschnitts befinden kann. Der wenigstens eine Stützabschnitt des Filterelements kann ein Gegenlager für den wenigstens einen Dichtabschnitt bilden. Der wenigstens eine Stützabschnitt kann verhindern, dass sich der wenigstens eine Dichtabschnitt beim Einschieben des rohrartigen Anschlusselements zu weit in radialer Richtung dehnt. So kann die Dichtfunktion weiter verbessert werden. Der wenigstens eine Dichtabschnitt kann auf diese Weise besser im Filterelement positioniert und gehalten werden.

Der Stützabschnitt kann vorteilhafterweise einstückig mit dem Endkörper verbunden sein. Er kann auch Teil des Endkörpers sein. Der wenigstens eine Stützabschnitt kann mit den anderen Abschnitten des Endkörpers vorteilhafterweise einstückig verbunden sein. Er kann vorteilhafterweise aus dem gleichen Material sein wie die anderen Abschnitte des Endkörpers. Vorteilhafterweise kann der Stützabschnitt insbesondere aufgrund einer entsprechenden Formgebung und/oder Materialdicke mechanisch stabiler ausgelegt sein als der wenigstens eine Verbindungsabschnitt. Vorteilhafterweise kann der wenigstens eine Stützabschnitt eine hülsenartige Form, insbesondere die Form eines Zylindermantels oder eines Kegelmantels, haben. Vorteilhafterweise kann der wenigstens eine Stützabschnitt auf einer Stirnseite mit dem Abschlussabschnitt auf der anderen Stirnseite mit dem wenigstens einen Verbindungsabschnitt verbunden sein. Der wenigstens eine Dichtabschnitt kann so um den Verbindungsabschnitt an der dem Abschlussabschnitt abgewandten Stirnseite des wenigstens einen Stützabschnitts umgestülpt werden. Der wenigstens eine Dichtabschnitt kann so in einem Innenraum des wenigstens einen Stützabschnitts angeordnet werden und sich an der radial inneren Umfangsseite des wenigstens einen Stützabschnitts abstützen.

Alternativ kann der wenigstens eine Stützabschnitt als separates Bauteil am Endkörper angeordnet sein. Es kann sich dabei vorteilhafterweise um eine axiale Verlängerung eines entsprechenden Stützrohrs des Filterelements handeln, welche durch die zentrale Fluidöffnung des Endkörpers hindurch reicht.

Bei einer weiteren vorteilhaften Ausführungsform kann der wenigstens eine Dichtabschnitt in einem Innenraum des Filtermediumhohlkörpers angeordnet sein. So kann der wenigstens eine Dichtabschnitt sicher und geschützt angeordnet werden. Ferner kann der wenigstens eine Dichtabschnitt im Innenraum platzsparend angeordnet werden. Der wenigstens eine Dichtabschnitt kann dabei vorteilhafterweise an einer radial inneren Umfangsseite eines Stützrohrs des Filterelements anliegen. Auf diese Weise kann der wenigstens eine Dichtabschnitt in radialer Richtung zu der radial inneren Umfangsseite des Filtermediums in einem Abstand gehalten werden. So kann eine Abdeckung der aktiven Filterfläche durch den wenigstens einen Dichtabschnitt verringert werden. Der wenigstens eine Dichtabschnitt kann vorteilhafterweise einfach durch Umstülpen in dem Innenraum des Filtermediumhohlkörpers angeordnet werden.

Bei einer weiteren vorteilhaften Ausführungsform kann der wenigstens eine Dichtabschnitt an einer dem Filtermediumhohlkörper abgewandten Außenseite des Endkörpers angeordnet sein. Auf diese Weise kann eine Abdeckung des Filtermediums durch den wenigstens einen Dichtabschnitt verringert werden. So kann eine aktive Filterfläche vergrößert werden. Ein etwaiger Stützabschnitt, an dem der wenigstens eine Dichtabschnitt sich abstützen kann, kann vorteilhafterweise ebenfalls an der Außenseite des Endkörpers angeordnet sein.

Die Aufgabe wird ferner erfindungsgemäß durch das Verfahren dadurch gelöst, dass der wenigstens eine Dichtabschnitt mittels wenigstens eines flexiblen Verbindungsabschnitts einstückig mit dem Abschlussabschnitt verbunden wird.

Die oben in Verbindung mit dem erfindungsgemäßen Filterelement und dessen vorteilhafter Ausführungsformen aufgezeigten Vorteile und Merkmale gelten für das erfindungsgemäße Verfahren und dessen vorteilhafte Ausgestaltungen entsprechend und umgekehrt. Erfindungsgemäß wird der Endkörper einfach mit dem wenigstens einen Dichtabschnitt, dem Abschlussabschnitt und dem wenigstens einen Verbindungsabschnitt einstückig realisiert. Die Abschnitte können so gemeinsam vorgefertigt, gelagert, transportiert und montiert werden. Der wenigstens eine Dichtabschnitt kann so einfach verliersicher mit dem Abschlussabschnitt verbunden werden. Der wenigstens eine Dichtabschnitt kann so auch einfach und genau an dem Filtermediumhohlkörper positioniert werden. Vorteilhafterweise kann der Endkörper nach einem Blasformverfahren aus Kunststoff hergestellt werden.

Bei einer vorteilhaften Ausgestaltung des Verfahrens kann der wenigstens eine Dichtabschnitt um den wenigstens einen Verbindungsabschnitt axial zu einer Achse des Dichtabschnitts umgestülpt werden. Auf diese Weise kann eine entsprechende Dichtfläche des Dichtabschnitts zunächst radial außen einfach zugänglich realisiert werden. Bei der Montage und dem Zusammenbau des Filterelements kann der wenigstens eine Dichtabschnitt entsprechend umgestülpt werden, so dass sich die entsprechende Dichtfläche an der radial inneren Umfangsseite befindet. Die Achse des Dichtabschnitts kann vorteilhafterweise mit der gedachten Achse des Filterelements zusammenfallen.

Bei einer weiteren vorteilhaften Ausgestaltung des Verfahrens kann der wenigstens eine Dichtabschnitt wenigstens an seiner radial äußeren Umfangsseite mit wenigstens einer Dichtkontur versehen werden, die nach dem Umstülpen des wenigstens einen Dichtabschnitts im Einbauzustand des Filterelements im Filter dem rohrartigen Anschlusselement zugewandt ist. Die wenigstens eine Dichtkontur kann einfach an der radial äußeren Umfangsseite realisiert werden. Mithilfe der Dichtkontur kann eine Dichtfunktion gegenüber dem rohrartigen Anschlusselement verbessert werden.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: eine isometrische Darstellung eines Rundfilterelements eines Luftfilters einer Brennkraftmaschine eines Kraftfahrzeugs gemäß einem ersten Ausführungsbeispiel, mit einem Filterbalg, an dessen einer Stirnseite eine Anschlussendscheibe mit einer Anschlussöffnung und einem Dichtabschnitt für die Anschlussöffnung befestigt ist, wobei der Dichtabschnitt in einem Innenraum des Filterbalges angeordnet ist;
- Figur 2: eine Detailansicht der Anschlussendscheibe aus Figur 1 in einem Vormontagezustand vor der Montage an dem Filterbalg;
- Figur 3: einen Längsschnitt des Rundfilterelements aus Figur 1;
- Figur 4: einen Längsschnitt der Anschlussendscheibe im Vormontagezustand aus Figur 2;
- Figur 5: einen Längsschnitt eines Rundfilterelements gemäß einem zweiten Ausführungsbeispiel, welches zu dem Rundfilterelement aus den Figuren 1 und 3 ähnlich ist, bei dem der Dichtabschnitt an der Außenseite der Anschlussendscheibe angeordnet ist.

In den Figuren sind gleiche Bauteile mit gleichen Bezugszeichen versehen.

### Ausführungsform(en) der Erfindung

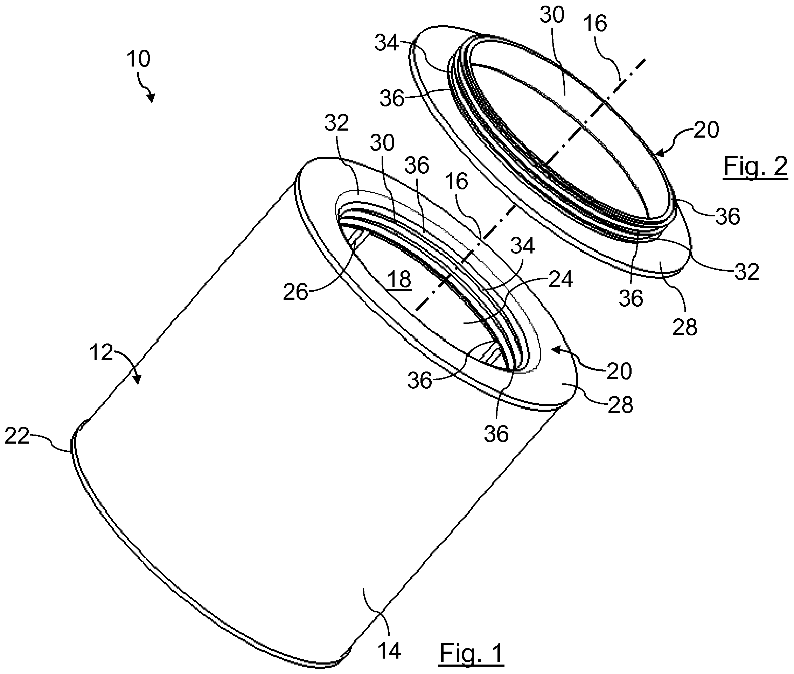

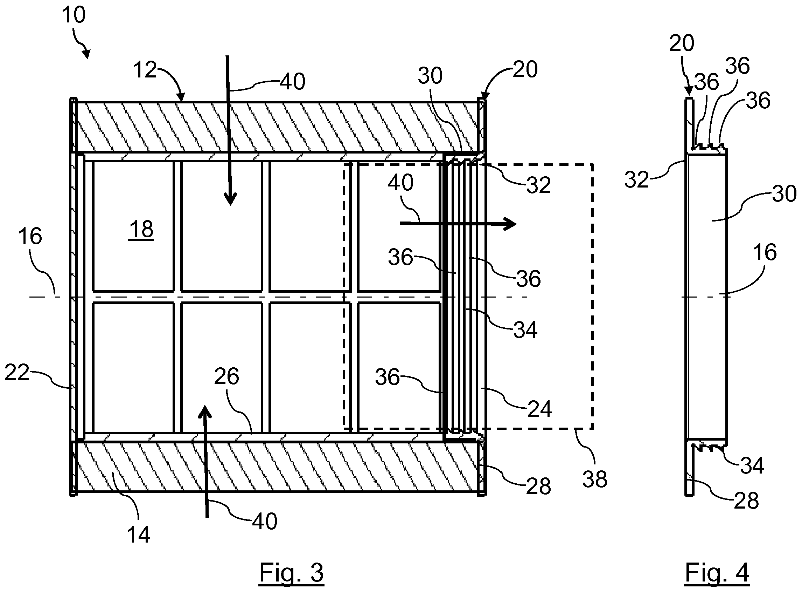

In den Figuren 1 und 3 ist ein Filterelement 10 eines Luftfilters einer Brennkraftmaschine eines Kraftfahrzeugs gezeigt. Das Filterelement 10 kann austauschbar in einem nicht gezeigten Filtergehäuse des Luftfilters so angeordnet werden, dass es einen Lufteinlass des Filtergehäuses von einem Luftauslass dicht trennt.

Das Filterelement 10 ist als Rundfilterelement mit einem runden Querschnitt ausgestaltet. Das Filterelement 10 umfasst einen Filterbalg 12 aus einem umfangsmäßig geschlossenen, zickzackförmig gefalteten Filtermedium 14. Bei dem Filtermedium 14 kann es sich beispielsweise um ein Filtervlies handeln. Das Filterelement 10 ist insgesamt koaxial zu einer gedachten Achse 16 aufgebaut. Die radial inneren Umfangsseiten des Filterbalgs 12 und die radial äußeren Umfangsseiten befinden sich jeweils auf einem zur Achse 16 koaxialen gedachten Zylindermantel. Der Filterbalg 12 umgibt einen Innenraum 18 des Filterelements 10 umfangsmäßig geschlossen.

Auf einer Stirnseite des Filterbalgs 12 ist eine Anschlussendscheibe 20 angeordnet, welche dicht mit dem Filtermedium 14 verbunden ist. Auf der anderen Stirnseite ist eine Gegenendscheibe 22 angeordnet und ebenfalls dicht mit dem Filtermedium 14 verbunden. Die Anschlussendscheibe 20 und die Gegenendscheibe 22 sind jeweils aus Kunststoff. Sie sind jeweils mittels eines Klebstoffes mit dem Filtermedium 14 verbunden. Alternativ können die Anschlussendscheibe 20 und die Gegenendscheibe 22 auch jeweils aufgeschmolzen werden und zum Verbinden das Filtermedium 14 in die aufgeschmolzenen Scheiben 20, 22 eingepresst werden.

Die Gegenendscheibe 22 ist durchgängig geschlossen und verschließt den Innenraum 18 an der entsprechenden Stirnseite des Filterbalgs 12.

Die Anschlussendscheibe 20 weist eine zentrale Öffnung 24 auf, welche koaxial zur Achse 16 ist. Der Durchmesser der Öffnung 24 ist etwas kleiner als der radial innere Durchmesser des Filterbalgs 12 und eines Durchmessers des Innenraums 18.

Im Innenraum 18 des Filterbalgs 12 ist ein gitterartiges Stützrohr 26 koaxial zur Achse 16 angeordnet. Das Stützrohr 26 ist ebenfalls aus Kunststoff oder auch Metall. Es liegt mit seinen radial äußeren Umfangsseiten an den radial inneren Umfangsseiten des Filterbalgs 12 an und stützt somit diesen. Die Stirnseiten des Stützrohrs 26 sind jeweils mit der Anschlussendscheibe 20 und der Gegenendscheibe 22 verbunden. Das Stützrohr 26 ist insgesamt an seiner Umfangsseite für Luft durchlässig. Das Stützrohr 26 besteht aus einer Mehrzahl von umfangsmäßig verlaufenden Umfangsstreben, welche mittels einer Mehrzahl von axial verlaufenden Axialstreben einstückig verbunden sind.

Die Anschlussendscheibe 20, welche in einem Vormontagezustand vor der Montage am Filterbalg 12 in den Figuren 2 und 4 gezeigt ist, weist einen Abschlussabschnitt 28, einen Dichtabschnitt 30 und einen flexiblen Verbindungsabschnitt 32 auf, die einstückig miteinander verbunden sind. Die Anschlussendscheibe 20 mit den Abschnitten 28, 30 und 32 ist nach einem Blasformverfahren hergestellt. Sie ist aus einem einzigen Kunststoffmaterial.

Der Abschlussabschnitt 28 hat die Form einer runden Ringscheibe, welche sich radial zur Achse 16 erstreckt. Der Abschlussabschnitt 28 weist die Öffnung 24 auf. Er ist mit einer Stirnfläche mit der Stirnseite des Filterbalges 12 verbunden.

Der Dichtabschnitt 30 hat die Form eines Zylindermantelabschnitts. Im montierten Zustand der Anschlussendscheibe 20 am Filterbalg 12 ist der Dichtabschnitt 30 koaxial zur Achse 16 im Innenraum 18 angeordnet. Eine Achse des Dichtabschnitts 30 fällt im montierten Zustand mit der Achse 16 zusammen und ist der besseren Übersichtlichkeit wegen auch in den Figuren 2 und 4 mit dem Bezugszeichen 16 versehen.

Der Dichtabschnitt 30 ist mittels des flexiblen Verbindungsabschnitts 32 mit der radial inneren Umfangsseite des Abschlussabschnitts 28 verbunden. Der Verbindungsabschnitt 32 und der Dichtabschnitt 30 sind jeweils bezüglich der Achse 16 umfangsmäßig geschlossen. Eine radial äußere Umfangsseite des Dichtabschnitts 30 liegt bei montierter Anschlussendscheibe 20 an der radial inneren Umfangsseite des Stützrohrs 26 an. Auf diese Weise stützt das Stützrohr 26 den Dichtabschnitt 30 und bildet so ein Gegenlager.

Die im eingebauten Zustand der Anschlussendscheibe 20 radial innere Umfangsseite des Dichtabschnitts 30 weist eine Dichtkontur 34 auf. Die Dichtkontur 34 besteht aus einem sägezahnartigen Profil. Die Dichtkontur 34 umfasst eine Mehrzahl von bezüglich der Achse 16 umfangsmäßig verlaufenden Stegen 36, welche die Zähne des sägezahnartigen Profils bilden. Die Stege 36 besitzen eine gewisse Elastizität, welche eine Dichtfunktion gegen einen in Figur 3 gestrichelt angedeuteten Anschlussstutzen 38 oder ein Mittelrohr des Filtergehäuses ermöglicht. Bei montierter Anschlussendscheibe 20 verlaufen die dem Innenraum 18 abgewandten Flanken der Stege 36 schräg zur Achse 16, so dass ein Einschieben des Anschlussstutzens 38 in die Öffnung 24, also in den Dichtabschnitt 30, vereinfacht wird. Die gegenüberliegenden, dem Innenraum 18 zugewandten Flanken der Stege 36 erstrecken sich radial zur Achse 16, so dass ein Herausziehen des Anschlussstutzens 38 erschwert wird.

Im Vormontagezustand der Anschlussendscheibe 20 vor der Montage am Filterbalg 12 befindet sich der Dichtabschnitt 30 auf der im Endmontagezustand dem Filterbalg 12 gegenüberliegenden Außenseite des Abschlussabschnitt 28. im Vormontagezustand ist die Dichtkontur 34 an der radial äußeren Umfangsseite des Dichtabschnitts 30 angeordnet. Auf diese Weise kann die Dichtkontur 36 einfach nach dem Blasformverfahren realisiert werden. Die Elastizität des Verbindungsabschnitts 32 ermöglicht das Umstülpen des Dichtabschnitts 30 aus dem Vormontagezustand in den Endmontagezustand.

Beim Betrieb des Luftfilters wird der Filterbalg 12 von radial außen nach radial innen von der zu filtrierenden Luft durchströmt. Die Luftströmung ist in Figur 3 angedeutet durch Pfeile 40. Bei dem Anschlussstutzen 38 des Filtergehäuses handelt es sich in der gezeigten Ausführungsform um einen Auslassstutzen.

Zur Herstellung des Filterelements 10 werden zunächst der Filterbalg 12, Anschlussendscheibe 20, Gegenendscheibe 22 und das Stützrohr 26 als separate Bauteile vorgefertigt.

Das Stützrohr 26 wird im Innenraum 18 des Filterbalgs 12 angeordnet. Die Anschlussendscheibe 20 und Gegenendscheibe 22 werden unter Zwischenlage von Klebstoff an den Stirnseiten des Filterbalgs 12 angeordnet. Anschließend wird der Dichtabschnitt 30 aus dem Vormontagezustand an der Außenseite der Anschlussendscheibe 20 um den Verbindungsabschnitt 32 axial zur Achse 16 in den Innenraum 18 des Filterbalges 12 gestülpt. Nach dem Austrocknen des Klebstoffs ist das Filterelement 10 einsatzbereit.

Zur Montage im Filtergehäuse wird das Filterelement 10 mit der Anschlussendscheibe 20 voran auf den Anschlussstutzen 38 gesteckt, wobei dieser durch die Öffnung 24 hindurch in den Dichtabschnitt 30 in den Innenraum 18 reicht. Die Dichtkontur 34 liegt dann dichtend an der radial äußeren Umfangsseite des Anschlussstutzens 38 an.

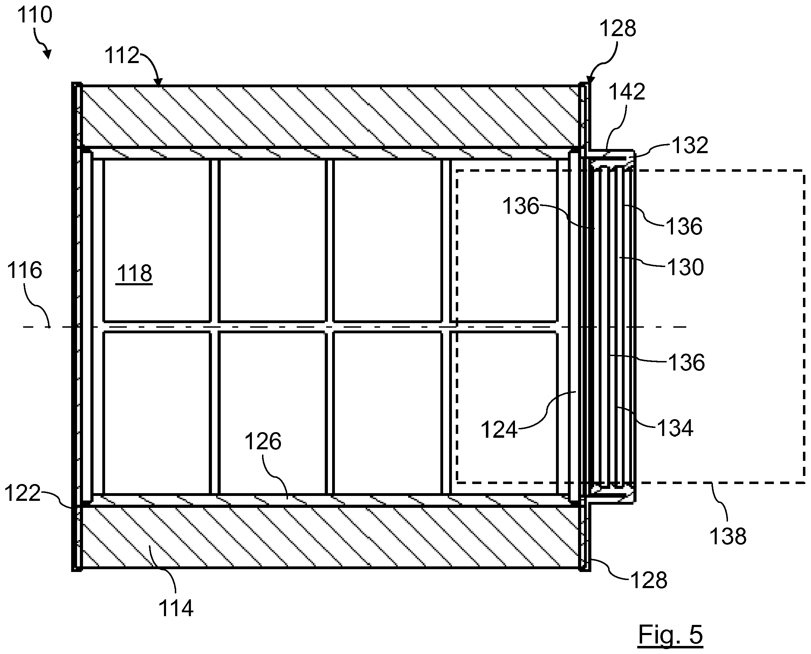

In Figur 5 ist ein zweites Ausführungsbeispiel eines Filterelements 110 gezeigt. Diejenigen Elemente, die zu denen des ersten Ausführungsbeispiels aus den Figuren 1 bis 4 ähnlich sind, sind mit denselben Bezugszeichen zuzüglich 100 versehen.

Das Filterelement 110 unterscheidet sich von dem Filterelement 10 gemäß dem ersten Ausführungsbeispiel aus den Figuren 1 bis 4 dadurch, dass ein Dichtabschnitt 130 statt im Innenraum 18 an der Außenseite der Anschlussendscheibe 20 angeordnet ist.

Zwischen dem Verbindungsabschnitt 132 und dem Abschlussabschnitt 128 ist ein Stützabschnitt 142 angeordnet. Der Stützabschnitt 142 hat die Form eines zur Achse 116 koaxialen Zylindermantels. Er ist mechanisch stabil. Der Stützabschnitt 142 ist einstückig mit seiner einen Stirnseite mit dem Abschlussabschnitt 128 und mit seiner anderen Stirnseite mit dem Dichtabschnitt 130 verbunden. Der Stützabschnitt 142 befindet sich auf der dem Filterbalg 12 abgewandten Außenseite des Abschlussabschnitt 128. Seine axiale Ausdehnung entspricht etwa der axialen Ausdehnung des Dichtabschnitts 130. Im montierten Zustand liegt die radial äußere Umfangsseite des Dichtabschnitts 130 an der radial inneren Umfangsseite des Stützabschnitts 142 an. Der Stützabschnitt 142 bildet so ein Gegenlager für den Dichtabschnitt 130 gegen den Anschlussstutzen 138 des Filtergehäuses.

Auch bei dem zweiten Ausführungsbeispiel ist der Dichtabschnitt 130 um den Verbindungsabschnitt 132 axial zur Achse 16 umgestülpt. Im Vormontagezustand der Anschlussendscheibe 120, welcher in den Figuren nicht gezeigt ist, befindet sich die Dichtkontur 134 analog zum ersten Ausführungsbeispiel, wie in Figur 4 gezeigt, an der radial äußeren Umfangsseite des Dichtabschnitts 130. Der Dichtabschnitt 130 ist dann nicht innerhalb des Stützabschnitts 142, sondern in axialer Richtung neben diesem auf der dem Abschlussabschnitt 128 gegenüberliegenden Seite angeordnet.

Die Montage des Filterelements 110 in dem Filtergehäuse erfolgt entsprechend dem ersten Ausführungsbeispiel des Filterelements 10.

Bei allen oben beschriebenen Ausführungsbeispielen eines Filterelements 10; 110 und eines Verfahrens zur Herstellung eines Filterelements 10; 110 sind unter anderem folgende Modifikationen möglich:
Die Erfindung ist nicht beschränkt auf Filterelemente 10; 110 von Luftfiltern von Kraftfahrzeugen. Vielmehr kann sie auch bei andersartigen Filterelementen, beispielsweise für Kraftstoff, Öl, Wasser oder einer Harnstofflösung, verwendet werden. Der Filter kann auch außerhalb von Kraftfahrzeugen, beispielsweise bei Industriemotoren, eingesetzt werden.

Das Filterelement 10; 110 kann statt austauschbar auch fest in dem Filtergehäuse angeordnet sein.

Das Filterelement 10; 110 kann statt als Rundfilterelement auch als andersartiges Filterelement mit einem als Hohlkörper ausgestalteten Filterbalg realisiert sein. Beispielweise kann das Rundfilterelement statt eines runden Querschnitts auch einen ovalen Querschnitt haben. Es kann sich auch um ein Filterelement mit einem eckigen Querschnitt handeln. Statt des zickzackförmig gefalteten Filtermediums kann auch ein andersartig umfangsmäßig geschlossenes Filtermedium, beispielsweise ein geschäumtes Filtermedium, verwendet werden.

Der Filterbalg 12; 112 kann statt von radial außen nach radial innen auch von radial innen nach radial außen durchströmt werden. Bei dem Anschlussstutzen 38; 138 handelt es sich in diesem Fall um einen Einlassstutzen.

## Patentansprüche

1. Filterelement (10; 110) eines Filters für Fluid, insbesondere Kraftstoff, Öl, Wasser, Harnstofflösung oder Luft, insbesondere einer Brennkraftmaschine, insbesondere eines Kraftfahrzeugs, mit einem als Filtermediumhohlkörper (12; 112) gestalteten, wenigstens bezüglich einer gedachten Achse (16; 116) umfangsmäßig geschlossenen Filtermedium (14; 114), welches an wenigstens einer Stirnseite einen Endkörper (20; 120) aufweist, der einen Abschlussabschnitt (28; 128) umfasst, der dicht wenigstens mit dem Filtermedium (14; 114) verbunden ist und der eine zentrale Fluidöffnung (24; 124) aufweist, in die ein rohrartiges Anschlusselement (38; 138) des Filters eingesteckt werden kann, und mit wenigstens einem umfangsmäßig geschlossenen hülsenartigen Dichtabschnitt (30; 130) an dem Endkörper (20; 120) zum umfangsmäßigen Abdichten der Fluidöffnung (24; 124) gegen das rohrartige Anschlusselement (38; 138), wobei der wenigstens eine Dichtabschnitt (30; 130) mittels wenigstens eines flexiblen Verbindungsabschnitts (32; 132) einstückig mit dem Abschlussabschnitt (28; 128) verbunden ist **dadurch gekennzeichnet, dass** der wenigstens eine Dichtabschnitt (30; 130) um den wenigstens einen Verbindungsabschnitt (32; 132) axial zu einer Achse (16; 116) des Dichtabschnitts (30; 130) nach innen umgestülpt ist, so dass eine Dichtfläche des Dichtabschnitts, die in einem Vormontagezustand radial außen vorlag, nach dem Umstülpen an einer radial inneren Umfangsseite des Dichtabschnitts (30; 130) vorliegt.

2. Filterelement nach Anspruch 1, **dadurch gekennzeichnet, dass** der Endkörper (20; 120) mit dem Abschlussabschnitt (28; 128), dem wenigstens einen Verbindungsabschnitt (32; 132) und dem wenigstens einen Dichtabschnitt (30; 130) als Blasformteil realisiert ist.

3. Filterelement nach einem der vorigen Ansprüche, **dadurch gekennzeichnet, dass** der wenigstens eine Dichtabschnitt (30; 130) wenigstens an seiner im Einbauzustand des Filterelements (10; 110) im Filter dem rohrartigen Anschlusselement (38; 138) zugewandten Umfangsseite wenigstens eine Dichtkontur (34; 134) aufweist.

4. Filterelement nach einem der vorigen Ansprüche, **dadurch gekennzeichnet, dass** der wenigstens eine Dichtabschnitt (30; 130) an wenigstens einem bezüglich der Fluidöffnung (24; 124) wenigstens teilumfänglich verlaufenden Stützabschnitt (26; 142) des Filterelements (10; 110), insbesondere eines Stützrohrs (26) und/oder des Endkörpers (120) anliegt, welcher sich im Einbauzustand des Filterelements (10; 110) auf der dem rohrartigen Anschlusselement (38; 138) radial gegenüberliegenden Seite des wenigstens einen Dichtabschnitts (30; 130) befindet.

5. Filterelement nach einem der vorigen Ansprüche, **dadurch gekennzeichnet, dass** der der wenigstens eine Dichtabschnitt (30) in einem Innenraum (18) des Filtermediumhohlkörpers (12) angeordnet ist.

6. Filterelement nach einem der Ansprüche 1 bis 4, **dadurch gekennzeichnet, dass** der wenigstens eine Dichtabschnitt (130) an einer dem Filtermediumhohlkörper (112) abgewandten Außenseite des Endkörpers (120) angeordnet ist.

7. Verfahren zur Herstellung eines Filterelements (10; 110), insbesondere nach einem der vorigen Ansprüche, für Fluid, insbesondere Kraftstoff, Öl, Wasser, Harnstofflösung oder Luft, insbesondere einer Brennkraftmaschine, insbesondere eines Kraftfahrzeugs, bei dem ein Filtermedium (14; 114) bezüglich einer gedachten Achse (16; 116) zu einem umfangsmäßig geschlossenen Filtermediumhohlkörper (12; 112) gestaltet wird; bei dem an wenigstens einer Stirnseite des Filtermediumhohlkörpers (12; 112) ein Endkörper (20; 120) mit einem Abschlussabschnitt (28; 128) dicht wenigstens mit dem Filtermedium (14; 114) verbunden wird, der eine zentrale Fluidöffnung (24; 124) aufweist, in die ein rohrartiges Anschlusselement (38; 138) des Filters eingesteckt werden kann; bei dem wenigstens ein umfangsmäßig geschlossener hülsenartiger Dichtabschnitt (30; 130) zum umfangsmäßigen Abdichten der Fluidöffnung (94; 124) gegen das rohrartige Anschlusselement (38; 138) an dem Endkörper (20; 120) angeordnet wird, wobei der wenigstens eine Dichtabschnitt (30; 130) mittels wenigstens eines flexiblen Verbindungsabschnitts (32; 132) einstückig mit dem Abschlussabschnitt (28; 128) verbunden wird, **dadurch gekennzeichnet, dass** der wenigstens eine Dichtabschnitt (30; 130) um den wenigstens einen Verbindungsabschnitt (32; 132) axial zu einer Achse (16; 116) des Dichtabschnitts (30; 130) nach innen umgestülpt wird, so dass eine Dichtfläche des Dichtabschnitts, die in einem Vormontagezustand radial außen vorlag, nach dem Umstülpen an einer radial inneren Umfangsseite des Dichtabschnitts (30; 130) vorliegt.

8. Verfahren nach Anspruch 7, **dadurch gekennzeichnet, dass** der wenigstens eine Dichtabschnitt (30; 130) wenigstens an seiner radial äußeren Umfangsseite mit wenigstens einer Dichtkontur (34; 134) versehen wird, die nach dem Umstülpen des wenigstens einen Dichtabschnitts (30; 130) im Einbauzustand des Filterelements (10; 110) im Filter dem rohrartigen Anschlusselement (38; 138) zugewandt ist.

## Claims

1. Filter element (10; 110) of a filter for fluid, in particular fuel, oil, water, urea solution or air, in particular of an internal combustion engine, in particular of a motor vehicle, having a circumferentially closed filter medium (14; 114) shaped as filter medium hollow body (12; 112), at least with respect to an imaginary axis (16; 116), which features on at least one front side an end body (20; 120) comprising a final section (28; 128) connected sealingly at least to the filter medium (14; 114) and featuring a central fluid opening (24; 124) into which a tubular connecting element (38; 138) of the filter can be inserted, and having at least one circumferentially closed sleeve-like sealing section (30; 130) at the end body (20; 120) for circumferentially sealing the fluid opening (24; 124) in relation to the tubular connecting element (38; 138), wherein the at least one sealing section (30; 130) is connected by means of at least one flexible connecting section (32; 132) in one piece to the final section (28; 128), **characterized in that** the at least one sealing section (30; 130) is inwardly inverted around the at least one connecting section (32; 132) axially in relation to an axis (16; 116) of the sealing section (30; 130) so that a sealing surface of the sealing section, which was located radially outwardly in a preassembled state, is located after the inversion on a radially inner circumferential side of the sealing section (30; 130).

2. Filter element according to claim 1, **characterized in that** the end body (20; 120) is realized as blow-molded part with the final section (28; 128), the at least one connecting section (32; 132) and the at least one sealing section (30; 130).

3. Filter element according to one of the above claims, **characterized in that** the at least one sealing section (30; 130) features at least at its circumferential side facing the tubular connecting element (38; 138) in the installed state of the filter element (10; 110) in the filter at least one sealing contour (34; 134).

4. Filter element according to one of the above claims, **characterized in that** the at least one sealing section (30; 130) abuts at least one support section (26; 142) of the filter element (10; 110) with respect to the fluid opening (24; 124) extending at least around part of the circumference, in particular of a support tube (26) and/or of the end body (120), which is in installed state of the filter element (10; 110) on the side of the at least one sealing connection (30; 130) radially opposing the tubular connecting element (38; 138).

5. Filter element according to one of the above claims, **characterized in that** the at least one sealing section (30) is disposed in an interior space (18) of the filter medium hollow body (12).

6. Filter element according to one of the claims 1 to 4, **characterized in that** the at least one sealing section (130) is disposed on an exterior side of the end body (120) facing away from the filter medium hollow body (112).

7. Process for producing a filter element (10; 110) in particular according to one of the above claims, for fluid, in particular fuel, oil, water, urea solution or air, in particular of an internal combustion engine, in particular of a motor vehicle, with a filter medium (14; 114) being shaped as a circumferentially closed filter medium hollow body (12; 112) with respect to an imaginary axis (16; 116); with an end body (20; 120), which features a central fluid opening (24; 124) into which a tubular connecting element (38; 138) of the filter can be inserted, having a final section (28; 128) connected sealingly at least to the filter medium (14; 114) on at least one front side of the filter medium hollow body (12; 112); with at least one circumferentially closed sleeve-like sealing section (30; 130) for circumferentially sealing the fluid opening (94 [sic!]; 124) in relation to the tubular connecting element (38; 138) being disposed at the end body (20; 120), wherein the at least one sealing section (30; 130) will be connected by means of at least one flexible connecting section (32; 132) in one piece to the final section (28; 128), **characterized in that** the at least one sealing section (30; 130) will be inwardly inverted around the at least one connecting section (32; 132) axially in relation to an axis (16; 116) of the sealing section (30; 130) so that a sealing surface of the sealing section, which was located radially outwardly in a preassembled state, is located after the inversion on a radially inner circumferential side of the sealing section (30; 130).

8. Process according to claim 7, **characterized in that** the at least one sealing section (30; 130) will be provided at east on its radially outer circumferential side with at least one sealing contour (34; 134) which after the inversion of the at least one sealing section (34; 134) in the installed state of the filter element (10; 110) in the filter is facing the tubular connecting element (38; 138).

## Revendications

1. Élément filtrant (10; 110) d'un filtre à fluide, en particulier à carburant, huile, eau, solution d'urée ou air, en particulier d'un moteur à combustion interne, en particulier d'un véhicule automobile, avec un milieu filtrant (14; 114) exécuté en tant que corps creux de milieu filtrant (12; 112), fermé en sens circonférentiel au moins par rapport à un axe imaginaire (16; 116), l'élément présentant sur au moins une face frontale un élément d'extrémité (20; 120) qui comprend une section finale (28; 128) qui est reliée de manière étanche au moins au milieu filtrant (14; 114) et qui comporte une ouverture de fluide centrale (24; 124) dans laquelle peut être inséré un élément de raccordement tubulaire (38; 138) du filtre, et comportant au moins une section d'étanchéité (30; 130) en forme de douille fermée en sens circonférentiel sur l'élément d'extrémité (20; 120) destinée à étancher l'ouverture de fluide (24; 124) en sens circonférentiel par rapport à l'élément de raccordement tubulaire (38; 138), la section d'étanchéité (30; 130), au moins au nombre d'une, étant reliée au moyen d'au moins une section de jonction (32; 132) flexible, en un bloc, à la section finale (28; 128), **caractérisé en ce que** la section d'étanchéité (30; 130), au moins au nombre d'une, est renversée vers l'intérieur autour d'une section de jonction (32; 132), au moins au nombre d'une, axialement par rapport à un axe (16; 116) de la section d'étanchéité (30; 130) de sorte à obtenir une surface d'étanchéité de la section d'étanchéité, laquelle se trouvait, dans un état prémonté, radialement à l'extérieur, après le renversement, d'un côté circonférentiel radialement intérieur, de la section d'étanchéité (30; 130).

2. Élément filtrant selon la revendication 1, **caractérisé en ce que** l'élément d'extrémité (20; 120) est exécuté en tant que pièce moulée par soufflage avec la section finale (28; 128), la section de jonction (32; 132), au moins au nombre d'une, et la section d'étanchéité (30; 130), au moins au nombre d'une.

3. Élément filtrant selon l'une des revendications précédentes, **caractérisé en ce que** la section d'étanchéité (30; 130), au moins au nombre d'une, présente, au moins de son côté circonférentiel dirigé en position de montage de l'élément filtrant (10; 110) dans le filtre, vers l'élément de raccordement tubulaire (38; 138), au moins un contour d'étanchéité (34; 134).

4. Élément filtrant selon l'une des revendications précédentes, **caractérisé en ce que** la section d'étanchéité (30; 130) au moins au nombre d'une, est en contact au moins sur une section d'appui (26; 142) de l'élément filtrant (10; 110) évoluant de manière au moins partiellement circonférentielle par rapport à l'ouverture de fluide (24; 124), en particulier d'un tube de support (26) et/ou de l'élément d'extrémité (120) qui se trouve en position de montage de l'élément filtrant (10; 110) du côté radialement opposé à l'élément de raccordement tubulaire (38; 138) de la section d'étanchéité (30; 130), au moins au nombre d'une.

5. Élément filtrant selon l'une des revendications précédentes, **caractérisé en ce que** la section d'étanchéité (30), au moins au nombre d'une, est disposée dans un espace intérieur (18) du corps creux de milieu filtrant (12).

6. Élément filtrant selon l'une des revendications 1 à 4, **caractérisé en ce que** la section d'étanchéité (130), au moins au nombre d'une, est disposée sur un côté extérieur de l'élément d'extrémité (120) opposé au corps creux de milieu filtrant (112).

7. Procédé de fabrication d'un élément filtrant (10; 110), en particulier selon l'une des revendications précédentes, à fluide, en particulier à carburant, huile, eau, solution d'urée ou air, en particulier d'un moteur à combustion interne, en particulier d'un véhicule automobile, dans lequel un milieu filtrant (14; 114) est exécuté en tant que corps creux de milieu filtrant (12; 112) fermé en sens circonférentiel par rapport à un axe imaginaire (16; 116); dans lequel, sur au moins une face frontale du corps creux de milieu filtrant (12; 112), un élément d'extrémité (20; 120) avec une section finale (28; 128) est relié de manière étanche au moins au milieu filtrant (14; 114) qui comporte une ouverture de fluide centrale (24; 124) dans laquelle peut être inséré un élément de raccordement tubulaire (38; 138) du filtre; dans lequel au moins une section d'étanchéité (30; 130) en forme de douille fermée en sens circonférentiel destinée à étancher l'ouverture de fluide (94 [sic!]; 124) en sens circonférentiel par rapport à l'élément d'assemblage tubulaire (38; 138) est disposée sur l'élément d'extrémité (20; 120), la section d'étanchéité (30; 130), au moins au nombre d'une, étant reliée au moyen d'au moins une section de jonction (32; 132) flexible, en un bloc , à la section finale (28; 128), **caractérisé en ce que** la section d'étanchéité (30; 130), au moins au nombre d'une, est renversée vers l'intérieur autour de la section de jonction (32; 132), au moins au nombre d'une, axialement par rapport à un axe (16; 116) de la section d'étanchéité (30; 130) de sorte qu'une surface d'étanchéité de la section d'étanchéité, laquelle se trouvait, dans un état prémonté, radialement à l'extérieur, se trouve après le renversement sur un côté circonférentiel radialement intérieur de la section d'étanchéité (30; 130).

8. Procédé selon la revendication 7, **caractérisé en ce que** la section d'étanchéité (30; 130), au moins au nombre d'une, est pourvue, sur sa face circonférentielle radialement extérieure, d'au moins un contour d'étanchéité (34; 134) qui, après le renversement de la section d'étanchéité (30; 130), au moins au nombre d'une, en position de montage de l'élément filtrant (10; 110) dans le filtre, est dirigé vers l'élément de raccordement tubulaire (38; 138).
